(19) **Europäisches Patentamt** / **European Patent Office** / **Office européen des brevets**

(11) **EP 3 272 226 B1**

(12) **EUROPEAN PATENT SPECIFICATION**

(45) Date of publication and mention
of the grant of the patent:
**03.01.2024 Bulletin 2024/01**

(51) International Patent Classification (IPC):
**A23L 2/02** *(2006.01)*      **A23L 2/56** *(2006.01)*
**A23L 27/12** *(2016.01)*      **A23L 27/29** *(2016.01)*
**A23L 29/231** *(2016.01)*

(21) Application number: **16764978.9**

(22) Date of filing: **15.03.2016**

(52) Cooperative Patent Classification (CPC):
(C-Sets available)
**A23L 2/02; A23L 2/56; A23L 27/13; A23L 27/29;
A23L 29/231;** A23V 2002/00                (Cont.)

(86) International application number:
**PCT/JP2016/058179**

(87) International publication number:
**WO 2016/148148 (22.09.2016 Gazette 2016/38)**

(54) **LIQUID COMPOSITION CONTAINING FRUIT ESSENTIAL OIL**

FLÜSSIGE ZUSAMMENSETZUNG MIT ÄTHERISCHEM ÖL AUS FRÜCHTEN

COMPOSITION LIQUIDE CONTENANT UNE HUILE ESSENTIELLE DE FRUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2015 ES 201530334**

(43) Date of publication of application:
**24.01.2018 Bulletin 2018/04**

(73) Proprietor: **Suntory Holdings Limited
Kita-ku, Osaka-shi,
Osaka 530-8203 (JP)**

(72) Inventors:
• **IBUSUKI, Daigo
Kawasaki-shi
Kanagawa 211-0067 (JP)**
• **FUJIWARA, Masaru
Kanagawa 211-0067 (JP)**
• **YOKOO, Yoshiaki
Kanagawa 211-0067 (JP)**

(74) Representative: **Vossius & Partner
Patentanwälte Rechtsanwälte mbB
Siebertstrasse 3
81675 München (DE)**

(56) References cited:
**JP-A- S5 682 073         JP-A- S5 682 073
JP-A- S63 254 959         JP-A- S63 254 959
JP-A- 2000 350 571        JP-A- 2000 350 571
JP-A- 2002 330 710        JP-A- 2002 330 710
JP-A- 2004 503 666        JP-A- 2004 503 666
US-A1- 2013 251 873**

(52) Cooperative Patent Classification (CPC): (Cont.)

C-Sets
A23V 2002/00, A23V 2250/1846, A23V 2250/1848,
A23V 2250/5072

**Description**

TECHNICAL FIELD

The present invention relates to liquid compositions in the form of an oil in water emulsion containing fruit's essential oils, or essential oils obtained from natural fruits. More particularly, the present invention relates to liquid compositions that comprise fruit's essential oils, glycerophospholipids of specified makeups and specified amounts of pectin and which are sufficiently low in acidity to be capable of inclusion within drinks while stably retaining the aroma components of the essential oils.

BACKGROUND ART

Fruit juice is commonly used in the manufacture of drinks with fruit tastes. Methods for producing the juice of citrus fruits, namely, techniques for squeezing juice from citrus fruits include the reamer process, the press process, the chopper-pulper-finisher process, and the in-line process (Non-Patent Document 1). In the reamer process, a citrus fruit is halved and pressed against a revolving reaming head which scrapes out the pulp of the fruit and squeezes the juice. The reamer process is said to provide juice of good quality since squeezing is possible without crushing seeds while keeping the oil cells intact without excessively abrading the segment membrane and flavedo. An apparatus that automates the reamer process has been developed by Brown Inc. In the press process, a citrus fruit either as a whole or cut into halves is nipped between two or more roller pairs but the percent effectiveness of squeezing is low and the quality of the juice obtained is also unsatisfactory.

In the chopper-pulper-finisher process, after processing with an automatic peeler, the peeled fruit is crushed with a strainer (i.e. chopper-pulper-finisher) to squeeze juice. To be more specific, the peeled fruit is charged into a hopper, then coarsely crushed with a chopper section having rotating knives and finally extruded through a screen. The in-line process, typically using an FMC-In-Line Citrus Juice Extractor, was developed in the United States of America and in this method, the pulp section is extracted from a whole fruit and juice is squeezed. This method is said to provide juice having superior aroma and flavor since the peel oil is included in the juice in an amount of about 0.01-0.03% and leftover peels, segment membranes and seeds that impart undesirable aroma and flavor to the juice are separated from the juice being squeezed. However, oxidation of the peel oil may sometimes become a problem in the production of juice concentrates for use in drinks.

As described above, various juice squeezing methods are known in the art but in the case of producing drinks from high acidity fruits such as lemon and lime, their juice cannot be included in large quantities since the resulting products become so high in acidity that they are not easy to drink. To deal with this problem, it has been proposed to reduce the acidity of citrus fruit juice by making use of an electrodialyzer (Non-Patent Documents 2 and 3). Attempts have also been made to fortify the flavor of drinks by making use of the essential oil component (peel oil) contained in the peel of citrus fruits. Examples include: blending the above-described juice with the peel or essential oil to make "comminuted juice" (Patent Document 1); dissolving the essential oil in ca. 50-60% aqueous alcohol to prepare an essence flavor that is soluble in drinks; and emulsifying the essential oil with surfactants such as natural polysaccharides extracted from the sap of gum arabic, gum ghatti, etc. or sucrose acetate isobutyrate esters, thereby preparing emulsified flavors.

Patent Document 2 relates to a method for producing a dispersion stabilizer capable of stably dispersing solids in a dispersion solution, characterized in that it contains raw materials containing apple or citrus pectin, or pectin components obtained by hydrothermal treatment of pectin under weak acidity at temperatures above 100°C and below 150°C.

CITATION LIST

PATENT DOCUMENTS

Patent Document 1: JP 2009-11246 A
Patent Document 2: JP 2002 330710 A

NON-PATENT DOCUMENTS

Non-Patent Document 1: Keizo F., Japan Food Science, 9, (6), 41 (1970)

Non-Patent Document 2: Fla. State. Hort. Soc. Proc. 73, 216 (1978)
Non-Patent Document 3: Z. Lebensrnittel-Technol-Verfahren, 28, 229 (1977)

SUMMARY OF INVENTION

TECHNICAL PROBLEM

The essential oils of citrus fruits have a tendency to deteriorate in fragrance as soon as they are added to fruit juice, so not only are they unable to maintain fresh aroma but the aroma strength is also low. One problem with essence flavors is that some of the aroma components are removed in the process of making the essence, so the final product has lost the balance in aroma that existed in the natural state. Another problem is that chemical reactions occur between the alochol and the fruit-derived aroma components, causing deterioration in fragrance and the resulting aromas may become somewhat different from the aromas of natural fruits. In particular, the fruit-derivd fresh fragrance is lacking. In the case of making emulsified flavors using surfactants such as gum arabic and sucrose acetate isobutyrate esters, the amounts of the surfactants must be at least equal to or greater than those of oil-soluble components but this sometimes results in a case where the unpleasant taste of the surfactants is annoying. As a further problem, the effect of surfactants may impair the natural scents inherent in fruits.

An object, therefore, of the present invention is to provide liquid compositions that do not use any synthetic additives such as synthetic flavors and surfactants and which therefore can be used in such a state that the fragrances derived from natural citrus fruits are kept more natural and fresh but less deteriorated than when the synthetic additives are used. More particularly, the object of the present invention is to provide liquid compositions that comprise large amounts of fruit's essential oils which contain large amounts of aroma components characteristic of citrut fruits, that are so low in acidity that they can be incorporated in large amounts in drinks, that hardly undergo phase separation during storage, and that are resistant to oxidative deterioration.

SOLUTION TO PROBLEM

The invention is defined by the claims.

The present inventors made intensive studies to prepare compositions that contain essential oils at high concentration, that have low acidity, and that feature high storage stability. In the process, the present inventors also studied the use of the peel and segment membrane which are generally considered to lower the flavor of fruit juice. As it turned out, by combining a fruit's essential oil with specified kinds of glycerophospholipids and a specified amount of pectin and homogenizing the combination in water, a novel liquid composition could successfuly be produced that contained aroma components derived from the fruit's essential oil, that was so low in acidity that it could be incorporated in a large amount in a drink, and that featured high stability during storage.

Specifically, the liquid composition in the form of an oil in water emulsion:

comprises a fruit's essential oil, glycerophospholipids, and pectin;
has an acidity of 2.0% or less; wherein
the content of the fruit's essential oil is in the range of 0.2-3.5% by volume of the total amount of the composition; the glycerophospholipids include phosphatidylcholine (PC) and phosphatidylethanolamine (PE), with the total concentration of PC and PE being in the range of 10-100 mg/kg/Brix of the total amount of the composition, and the PE to PC weight ratio (PE/PC) being in the range of 0.5-1.5;
and the concentration of the pectin is in the range of 0.5-10 g/kg/Brix of the total amount of the composition, a concentration of ethanol is 1% or less by weight based on the total weight of the composition, and the fruit's essential oil is derived from one or more citrus fruits having juice with an acidity of at least 1.5%.

The above-described fruit's essential oil, glycerophospholipids, and pectin may be derived from the peels of citrus fruits. The above-described liquid composition may be used as aroma juice which is added to drinks and it has a by far lower acidity than conventional types of fruit juice (including comminuted juice). It should be noted here that "mg/kg/Brix" as the unit of the concentrations of glycerophospholipids and pectin is obtained by dividing the concentration of glycerophospholipids or pectin (mg/kg) by the degrees Brix of the composition. Degrees Brix is the value of a reading on a sugar refractometer and corresponds to the content of soluble solids in a liquid.

The above-described liquid composition in the form of an oil in water emulsion uses water as the main solvent. The liquid composition has an ethanol concentration of 1% or less by weight and, more preferably, it is free of ethanol. Being usually produced by extracting aroma components into a hydrous alcohol, essence flavors contain the alcohol (usually ethanol), but the liquid composition of the present invention can be produced without using any alcohol. The absence of alcohols from this liquid composition is an advantage for the process of producing alcohol-free drinks.

BRIEF DESCRIPTION OF DRAWINGS

Fig. 1 is a cross section of a citrus fruit.
Fig. 2 is a diagram showing an example of analytical data for phosphatidylcholine (PC) and phosphatidylethanolamine (PE) obtained by using LC-MS.

DESCRIPTION OF EMBODIMENTS

<Fruit's essential oils>

The composition of the present invention contains fruit's essential oils in amounts ranging from 0.2 to 3.5% by volume of the total amount of the composition. The fruit's essential oils are a class of fragrant compounds that are mainly collected from the peels of citrus fruits. The fruit's essential oils are based on terpene compounds such as monoterpenes and sesquiterpenes and differ from oils and fats that are based on glycerides. Essential oils can be collected from plants by various methods including steam distillation, expression, solvent extraction, unfleurage, maceration, and supercritical extraction; the fruit's essential oils to be used in the present invention may be obtained by any of these methods. Steam distillation and expression are known to extract essential oils that consist of different components in entirely different proportions. If the essential oil components that are obtained by expression are used, the effects of the present invention are developed more markedly, so the essential oils that are obtained by expression are a preferred mode of the present invention.

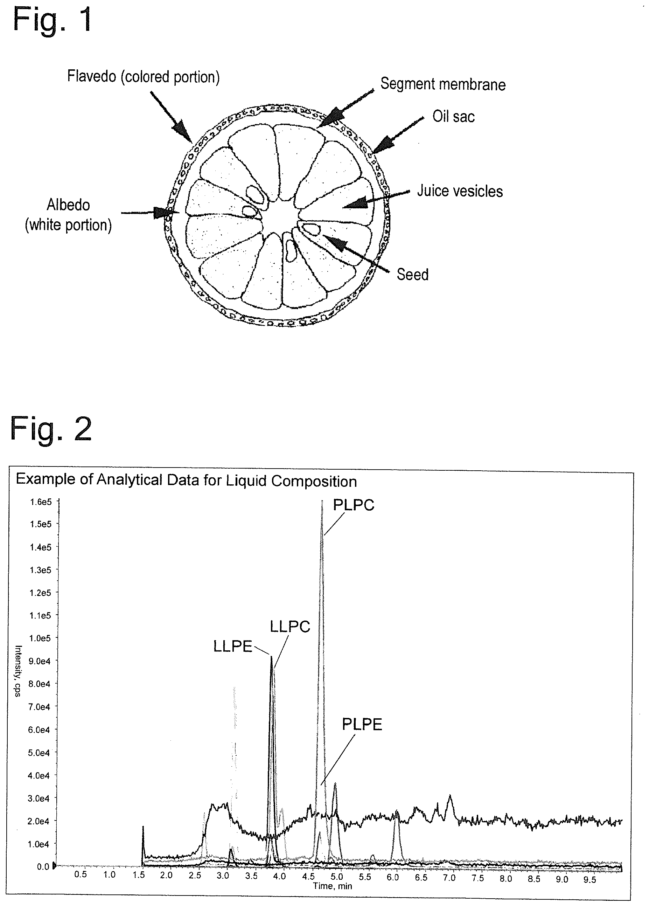

The term "expression" as used herein refers to a method in which a physical force is applied to the peel of a fruit so that an essential oil is obtained from oil cells present in the colored portion of the peel. In a known example of the expression process, the peel is mechanically bruised to rupture oil sacs, from which an essential oil is extracted (Florida Citrus Oils, Kesterson, et al., Technical Bulletin 749, December 1971, pp15-20.) As will be described later, the peel containing an essential oil may be emulsified under crushing in water and this method is also included in the expression process. The citrus peel includes a dark colored flavedo portion and a white fibrous albedo portion, with the flavedo containing a lot of oil sacs containing a large amount of essential oil (see Fig. 1 quoted from "Kajitsu no Jiten (Dictionary of Fruits)", published by Asakura Shoten, 2008, p. 198.) In the present invention, the peel, or the flavedo in particular, is collected and by emulsifying the oil sac containing peel as it is crushed in water, a liquid composition can be obtained that contains the fruit's essential oil. In the process, the peel or flavedo is preferably collected in such a way that the oil sacs are kept intact as much as possible until they are ruptured within water. By maintaining the oil sacs intact until they are emulsified in water, the essential oil in the oil sacs can be prevented from making direct contact with oxygen to reduce the possibility that the aroma components in the essential oil may deteriorate upon oxidation. The thus obtained fruit's essential oil is advantageous in that it is less susceptible to heat and oxygen and that, therefore, the aroma components will experience less deterioration. When the cold press method or other conventional technique for obtaining a fruit's essential oil is employed, it is necessary to take an essential oil out of oil sacs before the process completes, so its aroma components may deteriorate under direct action of oxygen.

The fruits to be used for obtaining fruit's essential oils are selected from among citrus fruits having juice with an acidity of at least 1,5 %. . The citrus fruits may be either of the genus Citrus or the genus Fortunella, both of which are generally consumed as food; for attaining maximum effects of the present invention, the genus Citrus is particularly preferred. Specific examples of the genus Citrus include: flavorful acid citruses (Citrus limon, Citrus aurantifolla, Citrus junos, Citrus spaerocarpa, Citrus aurantium, Citrus sudachi, Citrus depressa, Citrus medica, Citrus medica var. sarcodactylus (Buddha's hand), etc.); oranges (Citrus sinensis) (Valencia orange, Navel orange, Blood orange, etc.); grapefruits (Citrus paradisi) (marsh, ruby, etc.); other citruses (Citrus natsudaidai, Citrus hassaku, Citrus tamurana, Citrus grandis × paradisi (Oroblanco), Citrus reticulata cv. Dekopon, etc.); tangors (Citrus iyo, Citrus tankan, Citrus unshiu × sinensis, Citrus sinensis (Harumi), etc.); tangelos (Citrus × tangelo cv. Seminole, Citrus sinensis (Minneola), etc.); buntans (Citrus maxima, Citrus grandis (Banpeiyu), etc.); Satsuma mandarins (mandarin orange, Citrus kinokuni, Citrus unshiu, Citrus reticulata cv. Ponkan, Citrus tachibana, etc.) The genus Fortunella includes Fortunella crassifolia, Fortunella japonica, Fortunella margarita, etc. In particular, those citrus fruits whose juice itself is so strong in acidity that it cannot be incorporated in large quantities in drinks are preferred for use in the present invention. Examples of such high acidity citrus fruits include those having juice with an acidity of at least 1.5%, preferably at least 2.0%, more preferably at least 3.0%, and even more preferably at least 4.0%. Citrus fruits having very low sugar contents compared to acidity are also preferred in the present invention since they present a relatively strong perceivable sour taste. Examples of such citrus fruits having very low sugar contents compared to acidity include those having a Brix-acid ratio of 10 or less, preferably 8 or less, more preferably 5 or less, and particularly preferably 3 or less. The acidity as used herein is determined by first measuring the content of organic acids such as citric acid and malic acid by neutralization titration with sodium hydroxide, calculating the same in terms of citric acid, and expressing the converted value in percentage. The Brix-acid ratio refers to degrees Brix (a value indicated in percentage upon measurement with a sugar refractometer) as divided by acidity. Table 1 lists the degrees Brix, acidity and Brix-acid ratio for typical citrus fruits. Fruits that are advantageous for the present invention are exemplified by flavorful acid citruses such as Citrus limon, Citrus aurantifolia, Citrus sudachi, Citrus sphaerocarpa, Citrus depressa, and Citrus junos.

[Table 1]

[Table 1]

| <Acidity and degrees Brix of citrus fruits> | | | |
|---|---|---|---|
| Citrus Types | Brix (%) | Acidity (%) | Brix-acid ratio |
| Citrus limon | 7.00 | 4.50 | 1.56 |
| Citrus aurantifolia | 9.10 | 6.00 | 1.52 |
| Citrus junos | 8.90 | 4.28 | 2.08 |
| Citrus sphaerocarpa | 9.10 | 4.40 | 2.07 |
| Citrus sudachi | 8.20 | 6.63 | 1.24 |
| Citrus depressa | 9.20 | 4.18 | 2.20 |
| Citrus sinensis | 11.0 | 0.80 | 13.75 |
| Citrus paradisi | 9.90 | 1.36 | 7.28 |
| Citrus natsudaidai | 11.1 | 1.51 | 7.35 |
| Citrus tamurana | 10.2 | 1.88 | 5.43 |
| Citrus reticulata cv. Dekopon | 14.4 | 1.39 | 10.36 |
| Citrus iyo | 12.1 | 1.05 | 11.52 |
| Citrus unshiu × sinensis | 12.0 | 0.97 | 12.37 |
| Citrus maxima | 10.3 | 1.13 | 9.11 |
| Citrus unshiu | 10.2 | 0.72 | 14.17 |
| Citrus reticulata cv. Ponkan | 10.0 | 0.73 | 13.70 |

The concentration of the fruit's essetial oil in the liquid composition in the form of an oil in water emulsion ranges from 0.2 to 3.5% by volume of the total amount of the composition. Preferably, it ranges from 0.3 to 3.0% by volume, more preferably from 0.4 to 2.5% by volume, even more preferably from 0.4 to 2.0% by volume, and particularly preferably from 0.4 to 1.5% by volume. The concentration of the fruit's essential oil in the composition can be measured with an essential oil testing apparatus, or a distillation system using an essential oil quantifying device, as will be described below in the Examples.

<Acidity>

If fruit's essential oils, especially the essential oils of citrus fruits, are placed under high acidity conditions, they will readily deteriorate to smell like chemicals. The composition of the present invention, being reduced in acidity, is an aroma composition that is natural and fresh with less deterioration. The composition of the present invention has an acidity (as calculated for citric acid) of 2.0% or less, preferably 0.1-1.5%, more preferably 0.2-1.2%, and even more preferably 0.2-1.0%. Unlike comminuted fruit juice, the composition of the present invention may contain no components of fruit juice, so even if high acidity fruits are used, the acidity of the composition can be reduced to lower levels.

As a further advantage, the composition of the present invention may have a lower degrees Brix and, hence, it is an aroma composition that will undergo even less deterioration. The composition of the present invention preferably has degrees Brix of 25% or less, more preferably 20% or less, even more preferably 15% or less, and particularly preferably 1-10%.

<Glycerophospholipids>

The composition of the present invention is characterized by using glycerophospholipids, in particular, phosphatidylcholine (PC) and phosphatidylethanolamine (PE), and pectin as natural surfactants. In the composition of the present invention, the glycerophospholipids and pectin work synergistically to provide high storage stability in so small amounts that the unpleasant tastes of the surfactants will not be a problem.

The total concentration of PC and PE in the composition of the present invention is in the range of 10-100 mg/kg/Brix, preferably in the range of 15-90 mg/kg/Brix, and more preferably in the range of 20-80 mg/kg/Brix. The unit "mg/kg/Brix" derives from the concentration of each phospholipid in the composition (mg/kg) as a result of dividing it by the degrees Brix of the composition. Degrees Brix is the value of a reading on a sugar refractometer and correlates with the concentration of the soluble solids in the composition. The concentrations of PC and PE are summed up to calculate the total concentration for eleven types of compounds for each of PC and PE; the eleven types of compounds consist of: 1-palmitoyl-2-linoleoyl-sn-glycero-3-phosphocholine/phosphoethanolamine (PLPC/PLPE), 1,2-dilinoleoyl-sn-glycero-3-phosphocholine/phosphoethanolamine (LLPC/LLPE), 1-palmitoyl-2-oleyl-sn-glycero-3-phosphocholine/phsophoethanolamine (POPC/POPE), 1,2-di-oleyl-sn-glycero-3-phosphocholine/phosphoethanolamine (OOPC/OOPE), 1-oleyl-2-linoleoyl-sn-glycero-3-phosphocholine/phosphoethanolamine (OLPC/OLPE), 1-palmitoyl-2-linolenyl-sn-glycero-3-phosphocholine/phosphoethanolamine (PLnPC/PLnPE), 1-oleyl-2-linolenyl-sn-glycero-3-phosphocholine/phosphoethanolamine (OLnPC/OLnPE), 1,2-dilinolenyl-sn-glycero-3-phosphocholine/phosphoethanolamine (LnLnPC/LnLnPE), 1-linoleoyl-2-linolenyl-sn-glycero-3-phosphocholine/phosphoethanolamine (LLnPC/LLnPE), 1,2-dipalmitoleyl-sn-glycero-3-phosphocholine/phosphoethanolamine (PtPtPC/PtPtPE), and 1-palmitoleyl-2-linoleoyl-sn-glycero-3-phosphocholine/phosphoethanolamine (PtLPC/PtLnPE). The concentrations of PC and PE in the composition can be measured by the method to be described later in the Examples.

The value of PE/PC, or the concentration ratio of PE to PC in the composition of the present invention is in the range of 0.5-1.5, preferably in the range of 0.6-1.2. Although the underlying mechanism is not known, by adjusting PE/PC to lie within the above-mentioned ranges and incorporating the pectin in the amounts to be specified later, a liquid composition can be obtained that contains PC and PE in a smaller total amount and which yet has high storage stability. Again it should be noted that the concentrations of PC and PE are summed up to calculate the total concentration for eleven types of compounds for each of PC and PE.

From the viewpoint of convenience in adjusting PE/PC to lie within the above-specified ranges, it is preferred to use glycerophospholipids that are derived from the peels of citrus fruits. Soybean lecithin and yolk lecithin are two known examples of PC and PE sources that are commonly used in food products; however, soybean lecithin is generally considered to have a PE/PC ratio of about 2 to 3 and yolk lecithin a PE/PC ratio of about 0.1 to 0.4; in either case, the PE/PC ratio is outside the ranges specified for the glycerophospholipids that are to be used in the present invention and in order to incorporate the soybean and yolk lecithins in the liquid composition of the present invention, they must be mixed in appropriate proportions to give a PE/PC ratio that has been adjusted to lie within the above-indicated ranges. Using peel-derived glycerophospholipids offers another advantage in that by combining them with the fruit's essential oil, there can be obtained a composition whose aroma is even closer to that of natural fruits.

The total concentration of PC and PE in the glycerophospholipids to be used in the present invention and their PE/PC ratio can be obtained by adjusting the contents of PC and PE in the composition and its degrees Brix. In addition, as will be understood from the method to be described later, the same result can be obtained by emulsifying the essential oil containing peel or flavedo as they are crushed within water so that the peel-derived PC and PE are extracted into the liquid composition.

<Pectin>

In the present invention, in addition to the above-mentioned glycerophospholipids, pectin is also used as a component for improving emulsion stability. The pectin is preferably derived from the peels of citrus fruits although this is not the sole example of pectin that can be used in the present invention. By using the peel-derived pectin and combining it with the fruit's essential oil, there would be obtained a composition whose aroma is even closer to that of natural fruits.

The concentration of pectin in the composition of the present invention is in the range 0.5-10 g/kg/Brix, preferably in the range of 0.8-8.0 g/kg/Brix, and more preferably in the range of 1.0-5.0 g/kg/Brix. As will be described later, the liquid composition of the present invention contains the fruit's essential oil in the water serving as the main solvent and by virtue of containing the pectin in the above-indicated amounts plus the glycerophospholipids in the liquid composition, separation of the essential oil from water during storage can be avoided.

The concentration of pectin in the liquid composition in the form of an oil in water emulsion can be adjusted by adding a commercial grade of pectin into the composition comprising the fruit's essential oil and glycerophospholipids. Alternatively, as will be understood from the method to be described later, the same result can be obtained by emulsifying the essential oil containing peel or flavedo as they are crushed within water together with a small amount of pectin-containing fruit part (e.g. albedo or segment membrane) so that the peel-derived pectin is extracted into the liquid composition. The term "pectin" as used herein means soluble pectin that is extracted into hot water and its concentration is determined by the m-hydroxydiphenyl method to be described later in the Examples.

<Liquid composition>

The composition of the present invention is in a liquid state at room temperature under atmospheric pressure. It comprises water as the main solvent. Although the liquid composition of the present invention contains the fruit's essential oil in the water as the main solvent, the glycerophospholipids and pectin which are present in the specified amounts enable the composition to be stored for an extended period without the fruit's essential oil separating from the main solvent water. Preferably, the liquid composition of the present invention can be stored for a period of one and a half year under the temperature condition of -18°C or for a period of 120 days under the temperature condition of 0-5°C, without undergoing separation between the oil and water. The liquid composition of the present invention is in the form of an oil-in-water emulsion.

Since the liquid composition of the present invention uses water as the main solvent, it is highly miscible with drinks and can be added thereto with a small likelihood for the occurrence of separation and other problems. It should be particularly noted that when this composition is added to acidic drinks with a pH of 5 or less, preferably with a pH of 4 or less, the resulting acidic drinks have outstanding storage stability. Terpene-less oils are known as water-soluble flavors that may be incorporated in drinks, but being produced by extracting - the aroma components of the essential oil into ethanol and other organic solvents, the terpene-less oils (essence flavors) inevitably contain the organic solvents (e.g. ethanol). In contrast, the liquid composition of the present invention needs no extraction using organic solvents, so it can be produced using water as the sole solvent. The liquid composition of the present invention preferably contains 1% or less by weight of an organic solvent (an organic compound other than the fruit's essential oil components that is liquid at room temperature under atmospheric pressure) and more preferably, the composition contains no organic solvents. Stated more specifically, the composition preferably contains 1% or less by weight of ethanol and more specifically, it contains no ethanol. In recent years, non-alcohol drinks with an ethanol concentration of less than 0.01% are being produced and sold on the Japanese market. Since essence flavors as the conventional water-soluble flavors usually contain ethanol, they can be incorporated in only limited amounts into non-alcohol drinks. It is also known that fruit juices themselves contain ethanol in small amounts so they can be incorporated in only limited amounts into non-alcohol drinks. It may, therefore, be generally difficult to impart the flavor of fruit to drinks with the ethanol concentration being held to less than 0.01%. The liquid composition of the present invention whose ethanol concentration is low or zero can be incorporated in large amounts into non-alcohol drinks and can advantageously be used to flavor non-alcohol drinks.

When emulsified flavors using the terpene-containing essential oil are incorporated into drinks, the difference in specific gravity between the drink and the aqueous phase (which is typically 1.0 g/ml or above) may sometimes cause a float on the liquid surface of the drink (also known as "creaming") or form a ring-like deposit on the inner surface of a bottle's neck (also known as "neck ring"). Carbonated drinks involve the problem of an emulsion becoming unstable in a production step where carbon dioxide is blown in and with a view to increasing the emulsion stability, specific gravity modifiers such as brominated edible oils or sucrose acetate isobutyrate ester are usually employed. However, in the liquid composition of the present invention, the aforementioed glycerophospholipids and pectin are used in combination and this obviates the use of specific gravity modifiers. Even if no specific gravity modifiers are added to the liquid composition of the present invention, the stability in the appearance of the drink that contains the composition will not be impaired, nor will the essential oil components separate out in carbonated drinks.

The liquid composition of the present invention preferably has a pH of less than 5, more preferably a pH of less than 4. Since the specified amounts of glycerophospholipids and pectin are contained in addition to the fruit's essential oil, the essential oil components will not readily separate out. The low pH condition is advantageous for suppressing the growth of spoilage microorganisms.

As will be described later in a more specific way, another possible method for producing the liquid composition of the present invention comprises the following procedure: the peel or flavedo having oil sacs containing an essential oil is emulsified as it is crushed in water together with a small amount of the pectin-containing fruit part (e.g. albedo or segment membrane), whereupon the essential oil components are taken out of the oil sacs into the water and, at the same time, the glycerophospholipids and pectin are extracted from the peel into the water. As a result, the liquid composition can be produced without including any components other than the fruit and water and it serves as a liquid flavoring characterized by "no food additives used." By the term "no additives used" is meant that none of the additives on the "List of Products on the Registry of Existing Additives" specified in the Japan Food Sanitation Act have been "externally" added. The liquid composition in the form of an oil in water emulsion which solely consists of the fruit-derived components and water has a natural fruit-like aroma and flavor and is preferred.

The liquid composition of the present invention can be produced without using additives that are commonly called "emulsifiers" or "stabilizers." This liquid composition is preferably free from emulsifiers such as: glycerin fatty acid esters, enzyme treated soybean saponin, Enju saponin, barley husk extract, quillaja extract, sucrose fatty acid esters, calcium stearoyl lactylate, sorbitan fatty acid esters, soybean saponin, gall powder, tea seed saponin, animal sterols, tomato glycolipid, beat saponin, propylene glycol fatty acid esters, Yucca foam extract, yolk lecithin, gum arabic, soybean lecithin, curdlan, carrageenan, carboxymethyl cellulose, locust bean gum, xanthan gum, Aloe arborescens extract, chitin, chitosan, guar gum, glucosamine, yeast cell wall, psyllium seed gum, gellan gum, tamarind seed gum, Tara gum, Dammar resin, dextran, gum tragacanth, microfibrous cellulose, pullulan, methylcellulose, peach resin, Rhamsan gum, and levan. The liquid composition of the present invention is preferably free from glycerin, propylene glycol, sorbitol, maltitol, dextrin, saccharified starch in reduced form, glutinous starch syrup, and trehalose.

The liquid composition of the present invention may be incorporated into foods and drinks for the purpose of flavoring them. In the case of drinks, for example, the composition may be incorporated at concentrations varying from 0.1 to 15% by weight, preferably from 0.5 to 10% by weight, depending on the flavor to be imparted.

It is to be understood that the drink of the present invention as claimed comprises the liquid composition of the present invention at a concentration in a range of 0.1-15% by weight based on the total weight of the drink. Being an aqueous composition that is low in either acidity alone or both acidity and degrees Brix and which is relatively high in the content of fruit's essential oil, the liquid composition of the present invention has an advantage in that it can be incorporated into drinks in large enough amounts to ensure that the aroma components of the fruit's essential oil are amply contained in the drinks. Particularly in the case of producing drinks with the taste of high acidity citrus fruit, the aroma of the fruit can be fully reproduced within the drinks. The liquid composition of the present invention can also be used to impart the flavor of fruit to black tea and other tea beverages. The drinks in which the liquid composition of the present invention may be used are not particularly limited and may include various types such as alcoholic beverages, alcohol-free beverages, carbonated drinks, juice-containing drinks, and tea-based drinks. It is worth particular mention that if the liquid composition does not contain alcohol (ethanol), it can advantageously be used to flavor alcohol-free drinks. In particular, it can advantageously be used to flavor drinks (non-alcohol drinks) of low juice content which is in the range of about 1 -15% by weight, and more preferably 1-10% by weight, and this enables the manufacture of drinks that reproduce the fragrance of natural fruits. By using the liquid composition of the present invention, it is also possible to manufacture drinks that contain no synthetic additives such as synthetic flavors and surfactants.

<Production method>

The liquid composition in the form of an oil in water emulsion of the present invention can be produced by adjusting the amounts of the fruit's essential oil, acidity, and pectin, as well as the types and amounts of the glycerophospholipids. If desired, the composition can be produced using only a fruit or fruits and water in accordance with the method described below, which is given here for illustrative purposes only and is not the sole example that can be employed. The liquid composition that solely consists of fruit-derived components and water presents an aroma more like a natural fruit and, hence, is preferred.

First, the peel is collected from a citrus fruit by a commonly employed technique. The super surface layer of the peel may be removed in the collection process. The collected peel consists of a dark colored flavedo portion having oil sacs and a white fibrous albedo portion. Containing no oil sacs, the albedo portion of the peel has less aroma components than the flavedo portion does; in addition, depending on the fruit from which it is derived, the albedo portion may present a bitter taste, so the flavedo portion may be collected after most of the albedo portion has been removed from the peel. In this process, a small amount of the albedo portion may become included in the flavedo portion. In the process of collecting the peel or flavedo, care is preferably taken to ensure that the oil sacs in the flavedo are least destroyed. By not destroying the oil sacs, the essential oil contained in the oil sacs can be protected from oxidative deterioration.

The collected peel or flavedo is then mixed with water. The mixing ratio of water to peel (by weight) is preferably in the range of from about 0.5:1 to about 2.5:1, more preferably from about 0.6:1 to about 1.8:1, even more preferably from about 0.7:1 to about 1.5:1, and particularly preferably from about 0.7:1 to about 1:1. In this case, a pectin-containing fruit part (e.g. albedo or segment membrane) may be mixed in small amounts. After mixing the peel with water, an apparatus such as a mixer or homogenizer that is capable of dispersing the peel in water while shredding it into pieces may be used to form an emulsion in water of the essential oil contained in the oil sacs in the peel and to extract the glycerophospholipids from the peel into water. In the case where the pectin-containing fruit part is mixed, pectin can be extracted into water. If the peel or flavedo collected with care being taken to keep the oil sacs intact as much as possible is mixed with water and the essential oil is emulsified while rupturing the oil sacs within water, direct contact of the essential oil with the atmosphere can be avoided to reduce its deterioration. From the resulting mixture of water and the disrupted peel, the solids content is centrifugally or otherwise removed to give a liquid composition. The thus obtained liquid composition solely consists of water and the fruit components and, in the absence of any off-flavors due to components other than the fruit, it presents an aroma and flavor resembling those of natural fruit. As a further advantage, during the production of the liquid composition, the aroma components will undergo less oxidative deterioration and the produced composition presents a fresh aroma and flavor. What is more, due to the inclusion of pectin and glycerophospholipids, the fruit's essential oil is dispersed in water to form an oil-in-water emulsion which can be stored stably enough for an extended period without causing phase separation between the water and oil.

The composition of the present invention is an aroma-containing composition that is more natural and fresh while undergoing less deterioration than the conventional products. For the purpose of aroma enrichment, "concentration" that involves distilling off water and other solvents may commonly be performed but in the present invention, as described above, it is preferred to conduct "non-concentration, high-density extraction" by which the aroma components of the peel, in particular, the flavedo can be extracted with a small amount of water.

EXAMPLES

On the following pages, several examples of the present invention are given but it should be understood that the present invention is by no means limited to these Examples. Analyses were conducted by the following methods.

(1) Measurement of degrees Brix

Measurement of degrees Brix (%) was performed with a digital refractometer (manufactured by ATAGO CO., LTD.; Model No. RX-5000$\alpha$) at 20°C.

(2) Measurement of acidity

Ten grams of a liquid composition was diluted to a prescribed volume, thereby making a test solution. A given amount of the test solution was titrated with a 0.1 mol/L sodium hydroxide standard solution using phenolphthalein as a pH indicator and the titratable acidity was calculated by the following formula:

$$\text{Acidity } (\%) = K \times (T - B) \times F \times (100/A) \times (1/W) \times 100$$

K: calculated for citric acid = 0.0064
T: the amount of 0.1 mol/L sodium hydroxide solution used for titration (ml)
B: the amount of 0.1 mol/L sodium hydroxide solution used for titration in the same amount of water (ml)
F: the factor of 0.1 mol/L sodium hydroxide solution
A: the volume of sample taken for titration (ml)
W: the weight of sample taken for preparation (g).

(3) Measurement of the essential oil's content

To measure the essential oil's content in the composition, an essential oil quantifying apparatus was used. A round-bottom flask equipped with a condenser capable of trapping the essential oil was charged with 100 mL of the liquid composition, 2 L of distilled water, and boiling chips; atmospheric distillation was performed under heating at about 100°C for an hour and the amount of the essential oil (mL) collecting in the trap tube was measured to calculate the content of the essential oil.

(4) Measurement of glycerophospholipids

Glycerophospholipids, namely, phosphatidylcholine (PC) and phosphatidylethanolamine (PE) were quantified with LC-MS by the following procedure.

(Preparation of samples for analysis)

Samples for analysis were prepared by the following methods. First, 10 g of the liquid composition was weighed in a centrifugal glass tube (A). Note that when the liquid composition had a degrees Brix of 10% or more, 5 g was weighed; in the case of 20% or more, 2.5 g was weighed; and in the case of 30% or more, 1 g was weighed; in either case, the weighed liquid composition was diluted to 10 mL with distilled water for liquid chromatography. Subsequently, 20 mL of ethanol for liquid chromatography was added and the mixture was vigorously agitated with a vortex mixer for one minute or longer. When high viscosity prevented effective mixing, vigorous manual shaking was optionally performed. The intimate mixture was subjected to a centrifuge (1620 G $\times$ 30 min at 20°C) and the supernatant was transferred into another centrifugal glass tube (B). To the precipitate, 20 mL of ethanol for liquid chromatography was added and after breaking the solids loose enough with a suitable device such as a dispensing spoon, the mixture was vigorously agitated with a vortex mixer for one minute or longer. After centrifugation with a centrifuge (1620 G × 30 min at 20°C), the supernatant was charged into the centrifugal tube (B). The collected supernatants in the centrifugal tube (B) were further centrifuged (1620 G × 30 min at 20°C) and the resulting supernatant was transferred into a 50-mL measuring flask and diluted with ethanol to the marked line. The well mixed supernatant was further diluted 10-fold with ethanol for liquid chromatography and passed through a preliminarily ethanol washed PTFE filter (product of Toyo Roshi Kaisha, LTD; ADVANTEC DISMIC-25HP 25HP020AN, with a pore size of 0.20 μm and a diameter of 25 mm) to prepare samples for analysis.

(Conditions for LC analysis)

HPLC apparatus: Nexera XR Series (product of Shimadzu Corporation; equipped with system controller, CBM-20A; feed pump, LC-20ADXR; on-line degasser, DGU-20A3; auto-sampler, SIL-20ACXR; column oven, CTO-20A; and UV/VIS detector, SPD-20A) Column: CAPCELL CORE AQ (particle size, 2.7 μm; inside diameter, 2.1 mm × 150 mm; product of Shiseido Company, Limited)

Mobile phase A: 5 mM ammonium acetate in LC/MS grade ultrapurified water
Mobile phase B: 5 mM ammonium acetate in LC/MS grade methanol
Flow rate: 0.6 mL/min
Density gradient conditions: 0.0-9.0 min (94% B)→9.1-11.0 min (100% B), with 3.0 min equilibration by the initial mobile phase
Column temperature: 40°C
Sample injection: injected in a volume of 1.0 μL
Sample charge into mass spectrometer: 1.5-10.0 min
(Conditions for mass spectroscopy)
Mass spectrometer: 4000 Q TRAP (product of AB Sciex)
Ionization method: ESI (Turbo Spray), positive mode
Conditions of ionization chamber: CUR, 20; IS, 5500; TEM, 600; GS1, 70; GS2, 50; ihe, ON; CAD, Medium
Detection method: MRM mode
Detection conditions: Common to all runs ... DP, 100; CE, 40; CXP, 16; EP, 10; Dwell, 50 (msec)

Component names (Q1→Q3):
POPC (760.50→184.07)
PLPC and PtOPC (758.50→184.07)
PLnPC and PtLPC (756.50→184.07)
OOPC (786.50→184.07)
OLPC (784.50→184.07)
LLPC and OLnPC (782.50→184.07)
LLnPC (780.50→184.07)
LnLnPC (778.50→184.07)
POPE (718.50→577.50)
PLPE and PtOPE (716.50→575.50)
PLnPE and PtLPE (714.50→573.50)
OOPE (744.50→603.50)
OLPE (742.50→601.50)
LLPE and OLnPE (740.50→599.50)
LLnPE (738.50→597.50)
LnLnPE (736.50→595.50)

Peak detection time: Being subject to confirmation with standard samples, the following data may be given as a guide (see Fig. 2.)
POPC (6.03 min), PLPC (4.64 min), PtOPC (4.33 min), PLnPC (3.78 min), PtLPC (3.40 min), OOPC (6.37 min), OLPC (4.86 min), LLPC (3.81 min), OLnPC (3.95 min), LLnPC (3.11 min), LnLnPC (2.58 min), POPE (5.96 min), PLPE (4.58 min), PtOPE (4.29 min), PLnPE (3.74 min), PtLPE (3.37 min), OOPE (6.32 min), OLPE (4.82 min), LLPE (3.77 min), OlnPE (3.92 min), LlnPE (3.08 min), LnLnPE (2.57 min)

(Quantification method)

Standard samples were purchased from Avanti Polar Lipids, Inc. At least three standard sample solutions of different concentrations were used and quantification was performed by the absolute calibration method based on the peak areas obtained. When no standard samples were available for components of interest, calibration curves for similar components were substituted as indicated below.
POPC (→PLPC), PLPC (standard sample available), PtOPC (→PLPC), PLnPC (-PLPC), PtLPC (→PLPC), OOPC (standard sample available), OLPC (→LLPC), LLPC (standard sample available), OlnPC (→LLPC), LLnPC (→LLPC), LnLnPC (standard sample available), POPE (→PLPE), PLPE (standard sample available), PtOPE (→PLPE), PlnPE (→PLPE), PtLPE (→PLPE), OOPE (standard sample available), OLPE (→LLPE), LLPE (standard sample available), OlnPE (→LLPE), LlnPE (→LLPE), LnLnPE (standard sample available)

In the case of measurements that turned out to give values that were outside the ranges of calibration curves, the factor of dilution with ethanol at the final stage of analysis sample preparation was appropriately adjusted to perform another measurement.

(5) Pectin measurement

To samples weighing 0.25-1 g, 80 v/v% ethanol was added and each mixture was heated under reflux in an air-cooled tube at 80°C for an hour. Thereafter, the mixture was passed through a glass-fiber filter and the residue was washed with 80 v/v% ethanol. To the washed residue, water was added and after being heated under reflux in an air-cooled tube for an hour, the mixture was passed through a glass-fiber filter. After cooling the filtrate, its volume was adjusted to the prescribed level to prepare samples for pectin measurement. The amount of galacturonic acid in the obtained samples for pectin measurement was measured by the m-hydroxydiphenyl method (correction factor, 0.91; standard sample, galacturonic acid) and the amount of pectin was calculated by the following formula:

$$\text{Amount of pectin} = \text{amount of galacturonic acid} \times 0.91.$$

<Example 1>

(1) Production of lemon aroma composition

Peel was collected from lemons (of either FINO or PRIMOFIORI variety) and most of the albedo was removed from the peel. During the peel collection and albedo removal, care was taken to minimize possible damage to the oil sacs in the peel. The remaining lemon's flavedo was mixed with water at a weight ratio of 1:1 and the mixture was milled with a commercial juice mixer, with care being taken to ensure that the mixture would not have a paste-like consistency; after stirring at room temperature for 30 minutes, the mixture was passed through a 40-mesh strainer to effect solid-liquid separation. The liquid phase was thereafter homogenized at 0.2 MPa and the insoluble solids were removed from the resulting suspension by centrifugation (6000 G × 5 min) and then pasteurized by heating at 90°C for one minute to thereby prepare a liquid composition (Invention Product 1). The same procedure was taken for other lemons (of VERNA variety) to thereby prepare a liquid composition (Invention Product 2). Invention Products 1 and 2 were compared with three types of commercial comminuted lemon juice (Comparative Examples 1-3) and the results are shown in Table 2 below. The various lemon components were measured by the methods described above.

[Table 2]

| Invention | Invention Product 1 | Invention Product 2 | Comparative Example 1 | Comparative Example 2 | Comparative Example 3 |
|---|---|---|---|---|---|
| Ingredient | Peel | Peel | Whole fruit | Whole fruit | Whole fruit |
| Water content (g/100 g) | 95.5 | 96.1 | 76.1 | 77.2 | 94.3 |
| Degrees Brix (%) | 4.5 | 3.9 | 23.9 | 22.8 | 5.7 |
| Acidity (%) | 0.67 | 0.36 | 11.5 | 8.6 | 2.4 |
| Essential oil content (%) | 0.55 | 0.45 | 1.1 | 1.2 | 0.8 |
| Pectin (g/100 g) Parenthesized is pectin per solids fraction (g/kg/Brix) | 1.4 (3.1) | 1.3 (3.3) | 0.5 (0.21) | 0.6 (0.26) | 1.1 (1.9) |

(continued)

| Invention | Invention Product 1 | Invention Product 2 | Comparative Example 1 | Comparative Example 2 | Comparative Example 3 |
|---|---|---|---|---|---|
| Glycerophospholipids per solids fraction (mg/kg/Brix) | | | | | |
| PC 34:1 (PO) | 1.6 | 1.7 | 0.7 | 1.2 | 3.9 |
| PC 34:2 (PL) | 8.6 | 5.5 | 4.3 | 7.1 | 16.4 |
| PC 34:2 (PtPt) | 0.1 | 0.1 | 0.1 | 0.1 | 0.4 |
| PC 34:3 (PLn) | 4.3 | 3.6 | 2.5 | 4.1 | 9.6 |
| PC 34:3 (PtL) | 0.2 | 0.1 | 0.1 | 0.3 | 0.6 |
| PC 36:2 (OO) | 0.5 | 0.4 | 0.3 | 0.6 | 1.6 |
| PC 36:3 (OL) | 2.4 | 1.4 | 1.4 | 2.4 | 6.0 |
| PC 36:4 (LL) | 4.6 | 2.0 | 2.7 | 4.5 | 10.0 |
| PC 36:4 (OLn) | 1.3 | 1.0 | 0.9 | 1.6 | 3.9 |
| PC 36:5 (LLn) | 3.4 | 2.1 | 2.2 | 3.8 | 8.3 |
| PC 36:6 (LnLn) | 0.8 | 0.6 | 0.5 | 0.8 | 1.9 |
| PE 34:1 (PO) | 0.7 | 0.8 | 0.4 | 0.6 | 1.7 |
| PE 34:2 (PL) | 8.3 | 5.6 | 5.1 | 7.7 | 15.9 |
| PE 34:2 (PtPt) | 0.1 | 0.0 | 0.1 | 0.1 | 0.2 |
| PE 34:3 (PLn) | 2.5 | 2.2 | 1.9 | 2.7 | 5.9 |
| PE 34:3 (PtL) | 0.1 | 0.0 | 0.1 | 0.1 | 0.2 |
| PE 36:2 (OO) | 0.2 | 0.2 | 0.2 | 0.3 | 0.7 |
| PE 36:3 (OL) | 0.0 | 0.9 | 1.0 | 1.5 | 3.3 |
| PE 36:4 (LL) | 3.4 | 1.9 | 2.2 | 3.5 | 7.1 |
| PE 36:4 (OLn) | 3.9 | 0.5 | 2.7 | 4.1 | 9.0 |
| PE 36:5 (LLn) | 1.5 | 1.3 | 1.2 | 1.9 | 3.9 |
| PE 36:6 (LnLn) | 0.2 | 0.2 | 0.2 | 0.2 | 0.5 |
| PC Total | 27.8 | 18.6 | 15.9 | 26.6 | 62.6 |
| PE Total | 20.8 | 13.8 | 14.9 | 22.7 | 48.4 |
| PE/PC | 0.75 | 0.740 | 0.937 | 0.851 | 0.772 |
| PC+PE | 48.6 | 32.4 | 30.9 | 49.3 | 111.0 |

(2) Evaluation of storage stability

The liquid compositions prepared in (1) above (Invention Products 1 and 2 as well as Comparative Examples 1-3) were evaluated for their storage stability. Specifically, the compositions were stored in a refrigerator (0-5°C) for 60 days and then visually checked to see if the essential oil would separate from water. Invention Products 1 and 2, which were obtained by combining the fruit's essential oil with the specified types of glycerophospholipids and the specified amounts of pectin and performing subsequent homogenization within water, as well as Comparative Example 3 had superior storage stability. On the other hand, in Comparative Examples 1 and 2 with lower pectin concentrations, the essential oil was shown to separate slightly from water after storage.

(3) Flavor evaluation

The liquid compositions prepared in (1) above (Invention Products 1 and 2 as well as Comparative Examples 1-3) were evaluated for their flavor. To sucrose solutions adjusted to °Brix 10, the liquid compositions were added in the amounts indicated in Table 3 below and evaluated for their flavor. The flavor attributes evaluated were the intensity of a natural fresh aroma resembling that of natural fruit and the intensity of a deteriorated smell, and the grading system was on a 5-point scale using the criteria shown in Table 4 below. The results are shown in Table 3. The liquid compositions prepared by the process including a thermal pasteurization treatment under high acidity conditions (Comparative Examples 1-3) did not have a scent characteristic of natural fruit and instead emitted certain perceivable chemical-like or oxidized smells. On the other hand, the invention products containing the specified amounts of glycerophospholipids and having lower acidities hardly emitted any perceivable deteriorated smell but instead emitted an intense, natural, fresh fragrance.

[Table 3]

|  | Invention Product 1 | Invention Product 2 | Comparative Example 1 | Comparative Example 2 | Comparative Example 3 |
|---|---|---|---|---|---|
| Amount added to sucrose solution (g/L) | 10.0 | 11.5 | 1.9 | 2.0 | 7.9 |
| Flavor evaluation Intensity of natural fruit's aroma | 4 | 4 | 2 | 2 | 1 |
| Intensity of deteriorated smell | 0 | 1 | 2 | 1 | 3 |

[Table 4]

| Score | Degree |
|---|---|
| 4 | Perceived intensely |
| 3 | Perceived considerably |
| 2 | Perceived moderately |
| 1 | Perceived slightly |
| 0 | Not perceived |

(4) Production of lemon taste drinks

Invention Products 1 and 2 as well as Comparative Examples 1-3 prepared in (1) above were formulated according to the recipes shown in Table 5 below and water was added to give a total volume of one liter; the samples were then filled into bottles and pasteurized by heating at 85°C for 5 minutes to produce bottled drinks. The drinks were then stored at 30°C for a month and subjected to sensory evaluation as described in (3) above. The results are shown in Table 5 below. Even after 1-month storage, the invention products stably maintained a fresh and pleasant scent characteristic of lemon and it also had a sweetness reminiscent of the fruit.

[Table 5]

| | 1 | 2 | 3 | 4 | 5 | 6 | 7 | 8 |
|---|---|---|---|---|---|---|---|---|
| (Unit: g/L) | | | | | | | | |
| Aroma composition | Invention Product 1 | | Invention Product 2 | | Comparative Example 1 | | Comparative Example 3 | |
| | 10.0 | 20.0 | 11.5 | 23.0 | 1.9 | 3.8 | 7.9 | 15.8 |
| Granulated sugar | 90.0 | 90.0 | 90.0 | 90.0 | 90.0 | 90.0 | 90.0 | 90.0 |
| Citric acid anhydride | 1.5 | 1.5 | 1.5 | 1.5 | 1.3 | 1.1 | 1.1 | 0.7 |
| Purified water | q. s. | q. s. | q. s. | q. s. | q. s. | q. s. | q. s. | q. s. |
| Intensity of natural fruit's aroma (as stored) | 4 | 4 | 4 | 4 | 2 | 2 | 1 | 2 |
| Intensity of deteriorated smell (as stored) | 1 | 2 | 1 | 2 | 2 | 3 | 3 | 4 |
| Others | ·Fresh scent ·With sweetness | ·Fresh scent ·With sweetness | ·Fresh scent ·With sweetness | ·Fresh scent ·With sweetness | - With oxidized smell | ·With oxidized smell ·With astringency | ·With oxidized smell ·With astringency | ·With oxidized smell ·With intense astringency |

<Example 2>

Lemon aroma compositions were produced by the same method as used to produce Invention Product 1 in Example 1, except that the flavedo to water ratio used in the milling operation was varied to 1:1.75 (Invention Product 3), 1:2.5 (Invention Product 4), and 0.75:1 (Invention Product 5). The compositional values for the respective components were quantified as in Example 1. The aroma compositions thus obtained were processed as in Example 1(4) to produce bottled drinks, which were evaluated for their storage stability and flavor as in Example 1. The results are shown in Tables 6 and 7 below. The compositions of the present invention which contained the specified amounts of glycerophospholipids and pectin did not experience separation of the essential oil from water during storage. What is more, each of the compositions had a fresh and pleasant aroma and was free from deteriorated smells such as oxidized or chemical-like odor. It should be particularly mentioned that the milling operation performed with the flavedo to water ratio being held at values of 1 or below allowed development of a sweetness reminiscent of citrus fruit but without producing any perceivable bitterness and astringency.

[Table 6]

| | Invention Product 1 | Invention Product 3 | Invention Product 4 | Invention Product 5 |
|---|---|---|---|---|
| Ingredient | Peel | Peel | Peel | Peel |
| Water content (g/100 g) | 95.5 | 96.9 | 97.5 | 95.0 |
| Degrees Brix (%) | 4.5 | 3.1 | 2.5 | 5.0 |
| Acidity (%) | 0.67 | 0.46 | 0.37 | 0.75 |
| Essential oil content (%) | 0.55 | 0.35 | 0.30 | 0.55 |
| Pectin (g/100 g) Parenthesized is the pectin per solids fraction (g/kg/Brix) | 1.4 (3.1) | 0.96 (3.1) | 0.76 (3.0) | 1.60 (3.2) |
| Glycerophospholipids per solids fraction (mg/kg/Brix) | | | | |
| PC 34:1 (PO) | 1.6 | 1.9 | 1.1 | 1.6 |
| PC 34:2 (PL) | 8.6 | 5.8 | 4.1 | 7.9 |
| PC 34:2 (PtPt) | 0.1 | 0.1 | 0.1 | 0.1 |
| PC 34:3 (PLn) | 4.3 | 4.0 | 2.7 | 3.0 |
| PC 34:3 (PtL) | 0.2 | 0.1 | 0.1 | 0.2 |
| PC 36:2 (OO) | 0.5 | 0.4 | 0.3 | 0.6 |
| PC 36:3 (OL) | 2.4 | 1.5 | 1.1 | 2.6 |
| PC 36:4 (LL) | 4.6 | 2.1 | 1.6 | 5.3 |
| PC 36:4 (OLn) | 1.3 | 1.2 | 0.7 | 0.9 |
| PC 36:5 (LLn) | 3.4 | 2.4 | 1.5 | 2.9 |
| PC 36:6 (LnLn) | 0.8 | 0.7 | 0.4 | 0.5 |
| PE 34:1 (PO) | 0.7 | 0.8 | 0.5 | 0.8 |
| PE 34:2 (PL) | 8.3 | 5.8 | 4.6 | 7.8 |
| PE 34:2 (PtPt) | 0.1 | 0.0 | 0.0 | 0.1 |
| PE 34:3 (PLn) | 2.5 | 2.2 | 1.7 | 1.8 |
| PE 34:3 (PtL) | 0.1 | 0.0 | 0.0 | 0.1 |
| PE 36:2 (OO) | 0.2 | 0.2 | 0.1 | 0.2 |
| PE 36:3 (OL) | 0.0 | 1.0 | 0.8 | 1.5 |
| PE 36:4 (LL) | 3.4 | 2.1 | 1.5 | 3.5 |
| PE 36:4 (OLn) | 3.9 | 0.5 | 1.8 | 4.0 |
| PE 36:5 (LLn) | 1.5 | 1.4 | 0.9 | 1.3 |
| PE 36:6 (LnLn) | 0.2 | 0.2 | 0.1 | 0.1 |
| PC Total | 27.8 | 20.1 | 13.6 | 25.5 |
| PE Total | 20.8 | 14.5 | 12.2 | 21.2 |
| PE/PC | 0.75 | 0.72 | 0.90 | 0.83 |

(continued)

|  | Invention Product 1 | Invention Product 3 | Invention Product 4 | Invention Product 5 |
|---|---|---|---|---|
| PC+PE | 48.6 | 34.5 | 25.8 | 46.7 |

[Table 7]

| (Unit: g/L) |  |  |  |  |
|---|---|---|---|---|
|  | Invention product 1 | Invention product 3 | Invention product 4 | Invention product 5 |
| Aroma composition | 20.0 | 27.7 | 34.4 | 17.2 |
| Granulated sugar | 90.0 | 90.0 | 90.0 | 90.0 |
| Citric acid anhydride | 1.5 | 1.5 | 1.5 | 1.5 |
| Purified water | q. s. | q. s. | q. s. | q. s. |
| Storage stability | o (Good) | o (Good) | ○ (Good) | ○ (Good) |
| Flavor Intensity of natural fruit's aroma | 4 | 4 | 4 | 4 |
| Intensity of deteriorated smell | 0 | 0 | 0 | 0 |
| Others | ·Fresh scent ·With sweetness | ·Fresh scent ·With slightastringency and bitterness | ·Fresh scent ·With bitterness | ·Fresh scent ·With sweetness |

<Example 3>

Lemon aroma compositions (Invention Products 6-8) were produced by the same method as used to produce Invention Product 1 in Example 1, except that the amounts of the pectin-containing fruit part (albedo or segment membrane) was varied. As a comparison, a lemon aroma composition containing no pectin-containing fruit part at all such as the albedo or segment membrane was produced, solely from the flavedo portion (Comparative Example 4). The thus obtained aroma compositions were quantified for the compositional values of their respective components as in Example 1. The aroma compositions were also stored frozen in a freezer (-18°C) for a week. Thereafter, the compositions were completely thawed at room temperature and the emulsion stability upon the freeze/thaw cycle was evaluated by visual inspection of their appearance. In addition, bottled drinks were produced in accordance with the same recipe under the same conditions as for Invention Product in Example 2 and evaluated for their flavor. The results are shown in Tables 8 and 9 below. The compositions of the present invention which contained the specified amounts of glycerophospholipids and pectin had superior emulsion stability. The drinks produced using the invention products had a fresh and pleasant aroma and were free from deteriorated smells such as oxidized or chemical-like odor. It should be particularly noted that the invention products containing glycerophospholipids (PC+PE) at concentrations of 20-80 mg/kg/Brix and having pectin concentrations of 1.0-5.0 g/kg/Brix excelled in both aspects of storage stability and flavor.

[Table 8]

|  | Invention product 1 | Invention product 6 | Invention product 7 | Invention product 8 | Comparative Example 4 |
|---|---|---|---|---|---|
| Ingredient | Peel | Peel | Peel | Peel | Peel |
| Water content (g/100 g) | 95.5 | 95.4 | 96.0 | 95.0 | 95.8 |
| Degrees Brix (%) | 4.5 | 4.6 | 4.0 | 5.0 | 4.2 |
| Acidity (%) | 0.67 | 0.60 | 0.62 | 0.70 | 0.66 |
| Essential oil content (%) | 0.55 | 0.50 | 0.45 | 0.30 | 0.55 |

(continued)

|  | Invention product 1 | Invention product 6 | Invention product 7 | Invention product 8 | Comparative Example 4 |
|---|---|---|---|---|---|
| Pectin (g/100 g) Parenthesized is pectin per solids fraction (g/kg/Brix) Glycerophospholipids per solids fraction (mg/kg/Brix) | 1.4 (3.1) | 0.25 (0.55) | 2.2 (5.5) | 3.9 (7.8) | 0.13 (0.3) |
| PE/PC | 0.75 | 0.72 | 0.70 | 0.79 | 0.74 |
| PC+PE | 45.3 | 13.6 | 36.6 | 20.1 | 45.0 |

[Table 9]

|  | Invention product 1 | Invention product 6 | Invention product 7 | Invention product 8 | Comparative Example 4 |
|---|---|---|---|---|---|
| Emulsion stability upon freeze/ thaw cycle | ○ (Good) Precipitate formation was negligible and emulsion was retained. | △ (Fair) Precipitate formed in small amount. Emulsion was slightly retained. | ○ (Good) Precipitate formation was negligible and emulsion was retained. | ○ (Good) Precipitate formation was negligible and emulsion was retained. | x (Bad) Precipitate formed extensively and emulsion had broken. |
| Flavor Intensity of natural fruit's aroma | 4 | 4 | 4 | 4 | 4 |
| Intensity of deteriorated smell | 0 | 0 | 0 | 0 | 0 |
| Others | ·Fresh scent ·With sweetness | ·Fresh scent ·With sweetness | ·Fresh scent ·With slight off-flavors | ·Fresh scent ·With sweetness ·With slight off-flavors and bitterness | ·Fresh scent ·With sweetness |

<Example 4>

A lemon aroma composition (Invention Product 9) was produced by the same method as used to produce Invention Product 1 in Example 1, except that care was taken to keep oil sacs perfectly intact until the peel collection process ends. Further, a lime aroma composition (Invention Product 10) was produced as in Example 1 by using lime. Table 10 shows the acidity (%), fruit's essential oil (%), pectin concentration, and phosphatidylcholine and phosphatidylethanolamine concentrations of these products. Each of the compositions had a good emulsion stability. Drinks produced using these invention products had a fresh and pleasant aroma and were free from deteriorated smells such as an oxidized or chemical-like odor.

[Table 10]

|  | Invention Product 9 | Invention Product 10 |
|---|---|---|
| Ingredient | Lemon peel | Lime peel |
| Acidity (%) | 0.54 | 1.42 |
| Essential oil content (%) | 0.85 | 0.63 |
| Pectin (g/kg/Brix) | 0.51 | 0.56 |

(continued)

|  | Invention Product 9 | Invention Product 10 |
|---|---|---|
| Glycerophospholipids per solids fraction (mg/kg/Brix) |  |  |
| PE/PC | 0.86 | 1.48 |
| PC+PE | 22.2 | 54.0 |

<Production 1>

The ingredients identified in Table 11 were prepared as a 5-fold (v/v) syrup and subjected to pasteurization at 93°C for 3 minutes; following gas volume adjustment under mixing with high-pressure carbonated water, the mixtures were filled into bottles. Thereafter, shower pasteurization was conducted at 65°C for 10 minutes to produce two samples of carbonated drink (°Brix, 8.8; acidity, 0.15%; pH, 2.9; gas volume (v/v), 2.2). Of the two samples of carbonated drink, sample A did not contain any flavoring and yet it had a fresh and complex scent perceivable from the lemon fruit; the sweetness and scent of sample A were mellower than those of flavored sample B, giving a flavor reminiscent of the fruit.

[Table 11]

| (Unit: g/L) |  |  |
|---|---|---|
|  | Sample A | Sample B |
| Invention Product 1 | 40 | 0 |
| Flavoring | 0 | 2.0 |
| Granulated sugar | 85.0 | 85.0 |
| Citric acid anhydride | 1.0 | 1.0 |
| Frozen, concentrated, clear lemon juice (°Brix 38) | 2.5 | 2.5 |
| L-ascorbic acid | 0.15 | 0.15 |
| Purified water | q. s. | q. s. |

**Claims**

1. A liquid composition in the form of an oil in water emulsion comprising a fruit's essential oil, glycerophospholipids, and pectin, and having an acidity of 2.0% or less,

    wherein a content of the fruit's essential oil is in a range of 0.2-3.5% by volume based on the total amount of the composition;
    wherein the glycerophospholipids comprise phosphatidylcholine (PC) and phosphatidylethanolamine (PE), with a total concentration of PC and PE being in a range of 10-100 mg/kg/Brix based on the total amount of the composition, and a PE to PC weight ratio (PE/PC) being in a range of 0.5-1.5;
    wherein a concentration of the pectin is in a range of 0.5-10 g/kg/Brix based on the total amount of the composition, a concentration of ethanol is 1% or less by weight based on the total weight of the composition, and
    the fruit's essential oil is derived from one or more citrus fruits having juice with an acidity of at least 1.5%.

2. The liquid composition according to claim 1, wherein the glycerophospholipids are derived from one or more fruits.

3. The liquid composition according to claim 1 or 2, wherein the pectin is derived from one or more fruits.

4. A drink comprising the liquid composition according to any one of claims 1 to 3 at a concentration in a range of 0.1-15% by weight based on the total weight of the drink.

**Patentansprüche**

1. Eine flüssige Zusammensetzung in Form einer Öl-in-Wasser-Emulsion, umfassend ein ätherisches Öl aus Früchten, Glycerophospholipiden und Pectin, und mit einer Azidität von 2,0% oder weniger,

   wobei ein Gehalt des ätherischen Öls aus Früchten in einem Bereich von 0,2-3,5 Volumen-%, bezogen auf die Gesamtmenge der Zusammensetzung, liegt;
   wobei die Glycerophospholipide Phosphatidylcholin (PC) und Phosphatidylethanolamin (PE) umfassen, wobei eine Gesamtkonzentration an PC und PE in einem Bereich von 10-100 mg/kg/Brix, bezogen auf die Gesamtmenge der Zusammensetzung, liegt und ein PE zu PC-Gewichtsverhältnis (PE/PC) in einem Bereich von 0,5-1,5 liegt;
   wobei eine Konzentration des Pectins in einem Bereich von 0,5-10 g/kg/Brix, bezogen auf die Gesamtmenge der Zusammensetzung, liegt,
   eine Konzentration an Ethanol 1 Gew.-% oder weniger, bezogen auf das Gesamtgewicht der Zusammensetzung, beträgt und
   das ätherische Öl aus Früchten von einer oder mehreren Zitrusfrüchten mit Saft mit einer Azidität von mindestens 1,5% abgeleitet ist.

2. Die flüssige Zusammensetzung nach Anspruch 1, wobei die Glycerophospholipide von einer oder mehreren Früchten abgeleitet sind.

3. Die flüssige Zusammensetzung nach Anspruch 1 oder 2, wobei das Pectin von einer oder mehreren Früchten abgeleitet ist.

4. Ein Getränk, umfassend die flüssige Zusammensetzung nach einem der Ansprüche 1 bis 3 in einer Konzentration in einem Bereich von 0,1-15 Gew-%, bezogen auf das Gesamtgewicht des Getränks.

**Revendications**

1. Composition liquide sous la forme d'une émulsion huile dans l'eau comprenant une huile essentielle de fruit, des glycérophospholipides et de la pectine, et ayant une acidité de 2,0 % ou moins,

   dans laquelle une teneur en huile essentielle de fruit est de 0,2 à 3,5 % en volume par rapport à la quantité totale de la composition ;
   dans laquelle les glycérophospholipides comprennent la phosphatidylcholine (PC) et la phosphatidyléthanolamine (PE), avec une concentration totale de PC et de PE dans une plage de 10 à 100 mg/kg/Brix par rapport à la quantité totale de la composition, et avec un rapport pondéral PE sur PC (PE/PC) dans une plage de 0,5 à 1,5 ;
   dans laquelle une concentration de la pectine est dans une plage de 0,5 à 10 g/kg/Brix par rapport à la quantité totale de la composition,
   une concentration d'éthanol est de 1 % ou moins en poids par rapport au poids total de la composition, et
   l'huile essentielle de fruit est dérivée d'un ou de plusieurs agrumes ayant un jus avec une acidité d'au moins 1,5 %.

2. Composition liquide selon la revendication 1, dans laquelle les glycérophospholipides sont dérivés d'un ou de plusieurs fruits.

3. Composition liquide selon la revendication 1 ou 2, dans laquelle la pectine est dérivée d'un ou de plusieurs fruits.

4. Boisson comprenant la composition liquide selon l'une quelconque des revendications 1 à 3 à une concentration dans une plage de 0,1 à 15 % en poids par rapport au poids total de la boisson.

# Fig. 1

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009011246 A

- JP 2002330710 A

### Non-patent literature cited in the description

- **KEIZO F.** *Japan Food Science,* 1970, vol. 9 (6), 41
- *Fla. State. Hort. Soc. Proc.,* 1978, vol. 73, 216
- *Z. Lebensrnittel-Technol-Verfahren,* 1977, vol. 28, 229

- **FLORIDA CITRUS OILS ; KESTERSON et al.** *Technical Bulletin,* December 1971, vol. 749, 15-20
- **ASAKURA SHOTEN.** *Kajitsu no Jiten (Dictionary of Fruits),* 2008, 198